(19) Europäisches Patentamt / European Patent Office / Office européen des brevets

(11) **EP 3 287 190 B1**

(12) **EUROPÄISCHE PATENTSCHRIFT**

(45) Veröffentlichungstag und Bekanntmachung des Hinweises auf die Patenterteilung:
**01.07.2020 Patentblatt 2020/27**

(51) Int Cl.:
**B01J 19/00** *(2006.01)*

(21) Anmeldenummer: **16185849.3**

(22) Anmeldetag: **26.08.2016**

(54) **VERFAHREN ZUM ÜBERWACHEN EINES ZIELPROZESSPARAMETERS**

METHOD FOR MONITORING A TARGET PROCESS PARAMETER

PROCÉDÉ DESTINÉ À SURVEILLER UN PARAMÈTRE DE PROCESSUS CIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.02.2018 Patentblatt 2018/09**

(73) Patentinhaber: **Aquila Biolabs GmbH**
**52499 Baesweiler (DE)**

(72) Erfinder:
• **Herzog, Konrad**
**52134 Herzogenrath (DE)**
• **Frank, David**
**52134 Herzogenrath (DE)**

(74) Vertreter: **Roth, Andy Stefan**
**Dr. Roth Patentanwaltskanzlei**
**Kaistrasse 5**
**40221 Düsseldorf (DE)**

(56) Entgegenhaltungen:
**WO-A1-03/104783     WO-A1-2013/192510**
**US-A1- 2013 101 983**

**Beschreibung**

Die Erfindung betrifft ein Verfahren zum Überwachen eines Zielprozessparameters sowie eine Reaktoranordnung.

Aus dem Stand der Technik sind eine Vielzahl
an Vorrichtungen und Methoden zur Überwachung und
Quantifizierung von thermodynamischen Prozesse in
Reaktoren bekannt.

Ein bedeutender Parameter ist dabei die Temperatur des Reaktorinhalts. Diese Temperatur wird in biologischen und chemischen Reaktoren zumeist durch invasive, in den Reaktorinnenraum eingeführte Temperatursensoren erfasst, welche in direktem Kontakt zum Reaktorinhalt stehen. Derartige Messungen weisen bedingt
durch deren Invasivität mehrere gravierende Nachteile
auf. So müssen nach jedem Prozessende die Sensoren
gereinigt werden, da sie während des Prozesses verschmutzen und dadurch an Genauigkeit verlieren. Ferner können die Sensoren die Durchmischung und die
Fluiddynamik im Reaktor beeinflussen und damit die gewünschten Prozessergebnisse verfälschen.

Weiterhin sind aus dem Stand der Technik, wie
z.B. WO 2013/192510, Vorrichtungen und Verfahren zur
kontaktlosen Temperaturbestimmung bekannt, zumeist
bezeichnet als Pyrometer. Diese Geräte nutzen die Eigenschaft eines jeden Körpers mit einer Temperatur >0
K, Wärmestrahlung zu emittieren. Die Intensität und
Form des Wärmestrahlungsspektrums ist dabei abhängig von der Temperatur des Körpers und von dessen
Emissionsgrad. Pyrometer messen die Wärmestrahlungsleistung P, welche sich für einen realen Körper zumindest annähernd berechnet nach

$$P = \varepsilon(T, \lambda) \cdot \sigma \cdot A \cdot T^4$$

mit

    $\sigma$ der Stefan-Boltzmann-Konstante,
    $A$ der Fläche,
    $T$ der Temperatur und $\varepsilon(T,\lambda)$ dem Emissionsgrad in
    Abhängigkeit der Temperatur $T$ und der Wellenlänge
    der Wärmestrahlung A.

Aus dieser Gleichung lässt sich die Temperatur
bestimmen, sofern der Emissionsgrad des untersuchten
Objektes bekannt ist. Der Emissionsgrad $\varepsilon$ beschreibt
dabei den Anteil der Wärmestrahlung, welcher weder
durch das Objekt transmittiert noch von ihm reflektiert
wird und für ihn gilt immer $0 < \varepsilon < 1$ nach der Gleichung.

$$1 = \varepsilon + \tau + \rho$$

mit

    $\varepsilon$ dem Emissionsgrad,
    $\tau$ dem Transmissionsgrad,
    $\rho$ dem Reflexionsgrad.

Lediglich ein idealer schwarzer Strahler verfügt
dabei über einen Emissionsgrad von $\varepsilon = 1$. Der Emissionsgrad $\varepsilon$ bezieht sich stets auf die untersuchte Fläche
$A$. Insofern ist der Emissionsgrad eines Gemisches immer ein makroskopischer Mittel- oder Mischwert der
Komponenten des Gemischs.

Nachteilig bezüglich der aus dem Stand der
Technik bekannten Pyrometer ist ihre Limitierung auf solche Prozesse, bei denen der Emissionsgrad bekannt ist
oder bei denen die notwendigen Voraussetzungen für
die erfolgreiche Anwendung einer emissionsgradfreien
Temperaturbestimmung gegeben sind.

Für nahezu alle biologischen und für viele chemische Prozesse sind weder Emissionsgrade bekannt
noch können sonstige Verfahren erfolgreich eingesetzt,
werden, die ohne die Kenntnis der Emissionsgrade auskommen. Insbesondere ändert sich in biologischen und
chemischen Prozessen häufig der Gesamtemissionsgrad des zu untersuchenden Reaktorinhalts infolge der
Änderung von Eigenschaften und Mischungsverhältnissen der Komponenten des Reaktorinhalts, beispielsweise infolge von Zellwachstum, der Bildung oder dem Verbrauch farbiger oder IR-aktiver Substanzen, der Änderung der Partikel- oder Zellform und -größe oder der Bildung mehrphasiger Gemische wie Schäume, Dispersionen oder Emulsionen. Diese Veränderungen finden
teils mit hoher Geschwindigkeit statt, sodass die kontaktlose und nichtinvasive Temperaturbestimmung derartiger Reaktorinhalte mittels oben beschriebener pyrometrischer Verfahren nach dem Stand der Technik keine
verlässlichen thermodynamischen Informationen mehr
liefert.

Es ist Aufgabe der vorliegenden Erfindung, eine
verbesserte Messmethode zur Überwachung und Quantifizierung thermodynamischer Prozesse in Reaktoren
anzugeben, welche möglichst ohne invasive Messung
auskommt. Die der Erfindung zugrundeliegende Aufgabe wird gelöst durch ein Verfahren nach Anspruch 1 sowie eine Reaktoranordnung nach Anspruch 5 bevorzugte
Ausgestaltungen ergeben sich aus den Unteransprüche
sowie der Beschreibung.

Erfindungsgemäß ist ein Verfahren zum Überwachen eines Zielprozessparameters eines chemischen, biochemischen, biologischen und/oder physikalischen Prozesses, welcher innerhalb eines Reaktors abläuft, vorgesehen. Der Prozess umfasst zumindest eine
erste Komponente mit einem ersten Emissionsgrad und
eine zweite Komponente mit einem zweiten Emissionsgrad, wobei der erste Emissionsgrad und der zweite
Emissionsgrad unterschiedlich sind. Das Verfahren umfasst eine erste Messung einer vom Prozess ausgehenden Wärmestrahlung, die insbesondere innerhalb oder
außerhalb des Reaktors auftritt, wobei die Messung nicht
invasiv erfolgt. Anhand einer zweiten Messung wird zumindest ein zweiter Prozessparameter ermittelt. Auf Basis dieses zweiten Prozessparameters wird ein Anteilsverhältnis der ersten und zweiten Komponenten, und ggf. weiterer Komponenten, zueinander ermittelt. Auf Basis der gemessenen Wärmestrahlung und des Anteilsverhältnisses der Komponenten wird unter Berücksichtigung derer jeweiligen Emissionsgrade der Zielprozessparameter ermittelt.

Durch die Erfassung mindestens des zweiten Parameters, der folglich mit dem Emissionsgrad korreliert, lässt sich quantifizieren, ob eine Änderung der gemessenen Wärmestrahlung, insbesondere deren Energie, Leistung oder Intensität, durch eine Temperaturänderung im Prozess oder aber durch eine Änderung des makroskopischen Emissionsgrades (Gesamtemissionsgrades) hervorgerufen wurde. Dadurch lassen sich auch in komplexen und/oder dynamischen Prozessen, die auf Basis des Standes der Technik nicht oder nur bedingt thermodynamisch nichtinvasiv charakterisierbar sind, robuste thermische Daten errechnen, insbesondere aber nicht ausschließlich die Temperatur des sich kontinuierlich verändernden Reaktorinhalts.

Die nicht invasive Messung der Wärmestrahlung kann entweder direkt oder indirekt erfolgen. Im direkten Verfahren ist die Reaktorwand insgesamt (z.B. Glaswand) oder in einem Bereich (z.B. ein Fenster) für mindestens einen Wellenlängenbereich der Wärmestrahlung des Reaktorinhalts teilweise oder vollständig durchlässig, sodass die Wärmestrahlungsmessvorrichtung die Wärmestrahlung direkt erfassen kann. Im indirekten Verfahren ändert sich je nach Temperatur und Wärmestrahlung des Reaktorinhalts die Temperatur des Reaktors und damit die Wärmestrahlung, die der Reaktor abgibt. Diese wird dann im Rahmen der ersten Messung erfasst.

Bei dem Zielprozessparameter handelt sich um eine Prozesstemperatur des Prozesses. Anhand des erfindungsgemäßen Verfahrens kann dieser Zielparameter nun auf Basis der gemessenen Wärmestrahlung ermittelt werden, ohne dass es einer invasiven Messung bedarf. Dies wird insbesondere aufgrund der erlangten Erkenntnis über die Verhältnisse der Emissionsgrade im Reaktor möglich, die auf Grundlage der zweiten Messung ermittelt werden kann.

Auch bei der zweiten Messung wird der Prozessparameter vorzugsweise nicht invasiv ermittelt, so dass das Verfahren insbesondere vollständig ohne invasive Messung auskommt, und der zugrundeliegende Prozess daher möglichst unverfälscht abläuft. Es kommt zur zweiten Messung insbesondere ein photometrisches Messverfahren zum Einsatz, worin insbesondere anhand einer Fluoreszenz- oder Streulichtmessung die Mengenanteile der einen oder mehreren Komponenten ermittelt werden.

Das Verfahren ist insbesondere bei solchen Prozessen anwendbar, bei denen sich das Anteilsverhältnis der zumindest zwei Komponenten während des Prozesses verändert. Dabei werden die erste Messung und die zweite Messung mehrfach, insbesondere fortlaufend, während des Prozesses durchgeführt. Bevorzugt erfolgen die Messungen dabei kontinuierlich, was allerdings nicht zwingend erforderlich ist. Diskrete Messungen innerhalb geeigneter Zeitintervalle können je nach Prozessart genügen.

Das Verfahren ist ebenfalls anwendbar bei Prozessen, bei denen zumindest eine der zumindest zwei Komponenten in zumindest eine dritte Komponente umgewandelt wird und die Anteilsabnahme der ersten bzw. zweiten Komponente und/oder die Anteilszunahme der dritten Komponente über zweite die Messung ermittelt wird.

In einigen Verfahrensvarianten ist es vorteilhaft, die Wärmestrahlung in mehreren Wellenlängenbereichen getrennt oder aber in Form eines Spektrums aufzunehmen. Somit lassen sich insbesondere Absorptions- und/oder Reflexionsartefakte der Reaktorwand korrigieren oder eliminieren, um je nach Temperatur im optimalen Wellenlängenbereich messen zu können. Damit kann das erfindungsgemäße Verfahren mit aus dem Stand der Technik bekannten Quotientenverfahren kombiniert werden. Ebenfalls vorteilhaft kann es sein, die Wellenlängenbereiche der zu detektierenden Wärmestrahlung zu selektieren, insbesondere unter Verwendung von spektral selektiven optischen Elementen, wie Prismen, Beugungs- oder Transmissionsgittern, sowie Sensorarrays, linearen oder mehrdimensionalen CCD oder APS Sensoren oder Zeilensensoren im Allgemeinen.

Vorzugsweise wird die Wärmestrahlung an mehreren verschiedenen Positionen des Reaktors erfasst. Dies ist vorteilhaft, um einen Temperaturgradienten im Reaktor und/oder des Reaktorinhalts überwachen und lokalisieren zu können. Vorzugsweise erfolgt ferner eine Erfassung mehrerer gleicher und/oder unterschiedlicher ortsaufgelöster zweiter Parameter, welche mit den gewonnenen Wärmestrahlungsdaten verrechnet werden.

Vorzugsweise wird das Verfahren verwendet, um die Temperatur des Prozesses, zu regeln. Insbesondere wird dabei die zum Heizen oder Kühlen aufgebrachte Leistung oder Energie durch das erfindungsgemäße Verfahren erfasst, überwacht und/oder aufgezeichnet. In vorteilhafter Ausgestaltung ermöglicht das beanspruchte Verfahren somit prozessbegleitende kalorimetrische Messungen, wodurch wertvolles prozessassoziiertes Wissen insbesondere bezüglich Reaktions- und Konzentrationsverläufen, Gleichgewichtslagen sowie Bildungs-, Lösungs-, Schmelz-, Kondensations-, Verdampfungs- und Kristallisationsenthalpien generiert werden kann.

Die Art des zu messenden zweiten Parameters erfolgt vorzugsweise unter Berücksichtigung der Ursachen der prozessinhärenten Änderungen des makroskopischen Emissionsgrades. Bei dem makroskopischen Emissionsgrad (Gesamtemissionsgrad) handelt es sich insbesondere um einen Mischwert, der sich aus unterschiedlich gewichteten mikroskopischen Emissionsgraden zusammensetzt. Insbesondere gilt dies für mehrphasige Gemische (Emulsionen, Suspensionen, Schäume, etc.), in denen jede Komponente mit einem eigenen Emissionsgrad und gemäß ihrem jeweiligen Volumen- und/oder Flächenanteil und/oder Konzentration im Gemisch zum gesamten makroskopischen Emissionsgrad beiträgt.

Dabei wird der makroskopische Emissionsgrad als Mischwert aus mikroskopischen Emissionsgraden einzelner Komponenten des Reaktorinhalts und auf Basis der jeweils mit diesen mikroskopischen Emissionswerten korrelierenden Parametern ermittelt. Da die Bestimmung des makroskopischen Emissionsgrad in vorteilhafter Ausgestaltung des beanspruchten Verfahrens auf ursächlich erklärbaren oder zumindest modellierbaren Prozessen, welche durch den zweiten Parameter beschrieben werden, beruht, kann der makroskopische Emissionsgrad auf dieser Grundlage ebenfalls modelliert und/oder vorhergesagt werden (beispielsweise auf der Grundlage der Modellierung und Vorhersage von Zellwachstum, Substratverbrauch, Akkumulation von Produkten, wachstumsassoziierte Schaumbildung, schüttelbedingte Fluidverteilung und Turbulenz, etc.).

Insbesondere ist der zweite Parameter aus einem der folgenden Werte ausgewählt: Zelldichte, Biomasse oder Zellzahl, die Partikel-, Blasen-, Tröpfchen- oder Korngrößenverteilung, die Packungsdichte sowie die Partikelmorphologie und - Oberflächenbeschaffenheit. Hinzu kommen weiterhin jeweils pro Gemischkomponente und/oder für den gesamten Reaktorinhalt spektral aufgelöste oder wellenlängenbeschränkte Absorptions-, Reflektions-, Streuungs-, Transmissions- und Lumineszenzintensitäten, Polarisations- und Doppelbrechungsverhalten sowie pH-Wert, Ionenstärke, Zeta-Potential und Octanol-Wasser-Verteilungskoeffizient.

Der mit dem Emissionsgrad korrelierende zweite Parameter kann nicht nur direkt über eine Messung von Sensoren, sondern auch indirekt über Softsensoren erfasst werden. Dabei wird unter Einbeziehung verschiedener mathematischer Modelle und Verfahren aus vorhandenen Messwerten und Eigenschaften des Reaktorinhalts und/oder Reaktors, die nicht notwendigerweise mit dem Emissionsgrad korrelieren müssen, mindestens ein mit dem Emissionsgrad korrelierender Parameter errechnet. Typische, häufig nicht direkt messbare Parameter sind insbesondere die Stoffkonzentrationen und die Stoffpartialdrücke.

Während thermische Informationen, insbesondere in Form der Temperatur, häufig die bedeutsamsten Faktoren im Rahmen thermodynamischer Überwachung und Quantifizierung von Prozessen sind, erfordert die vollständige thermodynamische Bilanzierung eines Prozesses die Erfassung weiterer Parameter. In vorteilhafter Ausgestaltung der Erfindung wird daher durch mindestens einen weiteren Sensor der Druck im Reaktor und/oder durch mindestens einen weiteren Sensor mindestens ein Volumenstrom in den und/oder aus dem Reaktor bestimmt. Zudem erlaubt in vorteilhafter Ausgestaltung der Erfindung mindestens ein Ventil die Regelung des Drucks und/oder des Volumenstroms in den Reaktor hinein bzw. aus dem Reaktor heraus.

Die Erfindung zeichnet sich insbesondere dadurch aus, dass bei der Temperaturbestimmung durch Messung der Wärmestrahlung die dynamischen und prozessinhärenten Änderungen des Emissionsgrades innerhalb des Prozesses berücksichtigt werden. Somit wird nun auch in Prozessen eine zuverlässige nichtinvasive thermische Messung ermöglicht, ohne diese durch diese Messung selbst, insbesondere thermisch, zu beeinflussen. Eine Vielzahl biologischer und chemischer Prozesse erfordert eine kontinuierliche Durchmischung des Reaktorinhalts, beispielsweise durch kontinuierliches Rühren oder Schütteln. Infolgedessen können sich rapide Veränderungen des makroskopischen Emissionsgrades im Detektionsbereich des Sensors ergeben, insbesondere aber nicht ausschließlich durch die periodische Veränderung der Flüssigkeitsverteilung in geschüttelten Systemen, durch die kurzfristige Anwesenheit metallischer Rührwerke im Detektionsbereich des Sensors sowie durch die Erzeugung und Bewegung von Luftblasen oder Öltröpfchen. Insofern können auch hier mit dem Emissionsgrad korrelierende zweite Parameter erfasst werden, insbesondere aber nicht ausschließlich die Schüttelfrequenz und Schüttelposition, die Rührerdrehzahl und Rührerposition, die Beschleunigung, die Geschwindigkeit sowie die Flüssigkeitsverteilung. Diese Parameter können zudem in vorteilhafter Ausgestaltung der Erfindung genutzt werden, um den Beginn und/oder das Ende einer Wärmestrahlungsmessung zu triggern.

Die Erfindung ist insbesondere anwendbar zur Analyse und Regelung chemischer oder biologischer Prozesse, welche unter Erzeugung, Verbrauch oder Umsetzung thermischer Energie ablaufen. Diese thermodynamischen Veränderungen sind bedeutsam für den Erfolg eines Prozesses, da sie auf unterschiedlichste Weise dessen Verlauf beeinflussen, beispielsweise durch Änderung von Gleichgewichtslagen, Reaktionsraten, Proteinfaltungsbedingungen, Stoffwechselraten, Stofflöslichkeiten und Aggregatzuständen.

Weiterhin ist die Erfindung anwendbar zur Bilanzierung thermodynamischer Prozesse. Zudem erlaubt die Erfindung prozessbegleitende kalorimetrische Untersuchungen. Beide Nutzungsszenarien können wertvolle Hinweise insbesondere auf den Verbrauch von Substraten oder Edukten, die Bildung von Metaboliten oder Produkten sowie den Reaktionsverlauf geben.

Die Erfindung ist ferner anwendbar bei thermodynamischen Prozessen, bei denen eine insbesondere kontinuierliche Durchmischung, beispielsweise mittels Rühren oder Schütteln erfolgt. Solche Prozesse könnten andernfalls durch das Einbringen invasiver Temperatursensoren in ihrer Durchmischung und Mischungshomogenität gestört werden.

Weiterhin kann die Erfindung in kleinvolumigen Reaktorsystemen angewendet werden, welche bislang nicht thermodynamisch überwacht werden. Dieser Einsatzbereich ist insbesondere relevant, um die thermischen Effekte während des industriellen Up-Scalings bereits im Laborversuch abschätzen zu können und somit beispielsweise die Kühlung oder Heizung großvolumiger Produktionsreaktoren effizient und auf den Prozess angepasst zu dimensionieren und betreiben zu können.

Unter dem Begriff Reaktor wird im Rahmen der vorliegenden Erfindung ein Behältnis verstanden, welches insbesondere zur Kultivierung von Organismen oder zur Durchführung chemischer und biochemischer Reaktionsprozesse eingesetzt werden kann. Weitere Einsatzbereiche von Reaktoren sind unter anderem biokatalytische Prozesse unter Verwendung von Organismen und/oder Biomolekülen sowie andere chemische und/oder physikalische Prozesse, wobei vom Begriff Prozess alle Arten der Umwandlung, Auftrennung, Zusammenführung, Durchmischung, Größenänderung von insbesondere chemischen Stoffen, Organismen, Partikeln, Lösungen, Emulsionen und Schäumen umfasst sind. Reaktoren im Sinne der Erfindung umfassen insbesondere Rührkesselfermenter, Blasensäulenfermenter, Schüttelkolben, T-Flasks, Mikrotiterplatten, Deep-Well-Plates, Schüttelfässer, Fermentation-Bags, Mehrzweckröhrchen und Zellkulturschalen.

Unter dem Begriff Reaktorinhalt wird im Rahmen der vorliegenden Erfindung insbesondere das Medium verstanden, in welchem der zu beobachtende Prozess abläuft. Der Reaktorinhalt kann insbesondere einphasig oder mehrphasig sowie aus einer Komponente oder mehreren Komponenten zusammengesetzt sein. Als Komponenten gelten insbesondere Organismen und Biomoleküle entsprechend der obigen Beschreibung, chemische Substanzen, Partikel, Lösungen, Emulsionen und Schäume.

Als Organismen gelten insbesondere einzellige oder mehrzellige, prokaryote oder eukaryote Lebewesen oder deren Lysate sowie natürliche oder synthetische Systeme aus grundlegenden Biomolekülen, wobei diese insbesondere Nukleinsäuren, Proteine, Zucker und Lipide umfassen.

Unter der Wärmestrahlung oder der thermische Strahlung wird elektromagnetische Strahlung verstanden, die von jedem Objekt (Festkörper, Flüssigkeiten, Gase, Plasma, etc.) mit einer Temperatur >0 K emittiert wird. Das Wellenlängenspektrum und die Intensität der Wärmestrahlung sind insbesondere abhängig von der Temperatur, der Oberflächenbeschaffenheit und dem Emissionsgrad des Objekts.

Ein Wärmestrahlungssensor im Sinne der vorliegende Erfindung kann jede Vorrichtung darstellen, die dazu geeignet ist, Wärmestrahlung des Reaktors und/oder des Reaktorinhalts und/oder der Umgebung zu detektieren, indem mindestens eine sich ändernde Eigenschaft der detektierten Wärmestrahlung (insbesondere die Intensität und Wellenlängenverteilung) eine elektrische Reaktion des Sensors (beispielsweise Änderung einer elektrischen Spannung, eines elektrischen Potentials, eines elektrischen Stroms) hervorruft, welche durch weitere elektronische Komponenten (z.B. Analog-Digital-Converter, Operationsverstärker, Komparatoren, Widerstände, Kondensatoren etc.) erkannt/ausgelesen und/oder weiterverarbeitet, umgewandelt, und/oder gespeichert werden kann. Ein Messpunkt ist somit ein direktes oder verarbeitetes/modifiziertes Abbild der elektrischen Reaktion des Sensors zu einer bestimmten Zeit. Als Wärmestrahlungssensoren im Sinne der Erfindung gelten insbesondere einzeln oder als Array vorliegende Thermosäulen, Thermoelemente, Thermistoren, Pyroelektrische Sensoren, Fotodioden, Fotowiderstände und Fototransistoren, 1D-CCD-Chips (Zeilensensor), 2D-CCD-Chips, 1D-CMOS-APS-Chips (Zeilensensor), 2D-CMOS-Chip und/oder Lichtsensoren mit fluoreszierender Beschichtung.

Unter dem Begriff Rechner wird im Rahmen der vorliegenden eine elektronische Vorrichtung verstanden, die Daten (insbesondere arithmetische und logische) auf der Grundlage programmierbarer Vorschriften verarbeiten kann. Als Rechner im Sinne der Erfindung gelten insbesondere aber nicht ausschließlich Mikrocontroller, Mikroprozessoren, System-on-a-Chip Rechner (SoC), PCs und Server.

Geeignete mathematische Verfahren und informationstechnische Algorithmen im Sinne der Erfindung sind all jene Verfahren und Algorithmen, die sinnvoll und nutzbringend zur Verarbeitung und/oder Auswertung erfindungsgemäß gemessener und/oder berechneter und/oder aus gemessenen Daten abgeleiteter und/oder anderweitig bestimmter oder erzeugter Daten eingesetzt werden können, insbesondere Verfahren der Statistik, der Regressionsanalytik, der Ausgleichsrechnung, jegliche Art linearer und nichtlinearer Optimierungsverfahren sowie heuristische und gelenkte Suchalgorithmen, welche insbesondere lineare Suchen, Suchbaum-Algorithmen, graphentheoretische Suchalgorithmen, optimierende Suchverfahren, direkte Suchverfahren, evolutionäre Algorithmen, neuronale Netzwerke und statistische Suchverfahren wie "Simulierte Abkühlung" oder Monte-Carlo-Algorithmen umfassen.

Die Erfindung wird anhand der Figuren nachfolgend näher erläutert; hierin zeigt:

Figur 1 eine schematische Darstellung eines erfindungsgemäßen Reaktors zur Durchführung des erfindungsgemäßen Verfahrens;

Figur 2 eine schematische Darstellung eines biologischen Prozesses anhand von Diagrammen beispielhafter verfahrensrelevanter Parameter über die Prozesszeit.

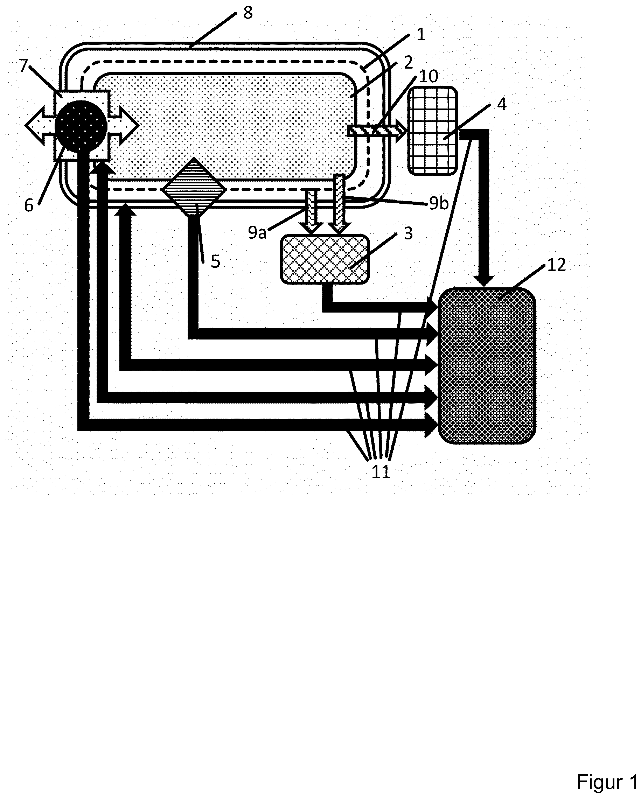

Anhand Figur 1 soll die grundlegende Funktionsweise des erfindungsgemäßen Verfahrens und der erfindungsgemäßen Reaktoranordnung anhand eines schematischen Ausführungsbeispiels beschrieben werden. Die Reaktoranordnung umfasst einen Reaktor 1, in welchem sich ein Reaktorinhalt 2 befindet. In diesem Reaktorinhalt läuft ein zu überwachender Prozess ab. Aus dem Reaktorinhalt 2 wird Wärmestrahlung 9b auf und zumindest teilweise durch den Reaktor 1 gestrahlt. Der Reaktor 1 strahlt seinerseits Wärmestrahlung 9a ab. Die gesamte Wärmestrahlung 9 wird durch einen ersten Sensor 3 erfasst, welcher ein Wärmestrahlungssensor 3 ist. Der erste Sensor 3 ist außerhalb des Reaktors 1 angeordnet. Die vom ersten Sensor 3 erfasste Wärmestrahlung 9 stellt einen ersten Parameter dar und wird gemäß des räumlichen und wellenlängenbezogenen Detektionsbereichs des ersten Sensors 3 erfasst, gegebenenfalls verarbeitet und über eine Datenleitung 11 an einen Rechner 12 übertragen.

Es wird mindestens ein weiterer, zweiter Parameter 10 des Reaktorinhalts 2 und/oder des Reaktors 1 durch einen zweiten Sensor 4 erfasst. Der weitere Parameter 10 korreliert mit dem Emissionsgrad des Prozesses. Der zweite Sensor 10 ist außerhalb des Reaktors 1 positioniert. Der zweite Sensor 4 kann ein Softsensor sein, welcher aus anderen Messgrößen einen entsprechenden Parameter 10 ermittelt. Insofern kann es sich bei dem zweiten Sensor 4 um einen Controller, Rechner oder Programm handeln, welcher aus einem oder mehreren Messwerten den zweiten Parameter 10 ermittelt.

Die durch den zweiten Sensor 4 erfassten Daten werden gegebenenfalls verarbeitet und über eine Datenleitung 11 an den Rechner 12 gesendet.

Der Rechner 12 verarbeitet die erhaltenen Daten mittels geeigneter mathematischer Verfahren, korreliert sie miteinander und ermittelt aus ihnen thermische Daten. Die durch den Rechner 12 ermittelten thermischen Daten können eine Temperatur des Reaktorinhalts 2 oder des Reaktors 1 umfassen, beschränken sich aber nicht zwangsläufig auf eine Temperatur des Reaktorinhalts 2 oder des Reaktors 1.

Insbesondere aber nicht ausschließlich zum Zweck der thermodynamischen Bilanzierung werden in vorteilhafter Ausgestaltung der Erfindung zudem der Druck im Inneren der Reaktors 1 durch mindestens einen Drucksensor 5 und/oder mindestens ein Volumenstrom in den und/oder aus dem Reaktor 1 durch mindestens einen Volumenstromsensor 6 erfasst, gegebenenfalls verarbeitet und dann an den Rechner 12 übermittelt über eine Datenleitung 11. In vorteilhafter Ausgestaltung der Erfindung sind Druck und Volumenstrom am Reaktor durch mindestens ein Ventil 7 regelbar.

In einer vorteilhaften Ausgestaltung der Erfindung ist eine Temperierungsvorrichtung 8 vorgesehen, anhand welcher die Temperatur des Reaktors 1 und/oder des Reaktorinhalt 2 beeinflusst werden kann. Die Temperierungsvorrichtung 12 ist insbesondere durch den Rechner 12 ansteuerbar. Die Temperierungsvorrichtung 12 kann den Reaktor 1 und/oder den Reaktorinhalt 2 zumindest teilweise umgeben. Die Temperierungsvorrichtung 12 kann ein Bestandteil eines Regelkreises zur Regelung der Temperatur des Reaktors 1 und/oder des Reaktorinhalt 2 sein.

In weiterer vorteilhafter Ausgestaltung der Erfindung erfasst die Temperierungsvorrichtung 8 die zur Temperierung erforderliche Energie und/oder Leistung und übermittelt sie an den Rechner 12. Die dortige mathematische Verarbeitung aller eingehenden Daten erlaubt in vorteilhafter Ausgestaltung der Erfindung prozessbegleitende kalorimetrische Messungen und damit in Kombination mit der thermodynamischen Bilanzierung eine optimale thermodynamische Überwachung und Quantifizierung thermodynamischer Prozesse im Reaktor 1 und Reaktorinhalt 2.

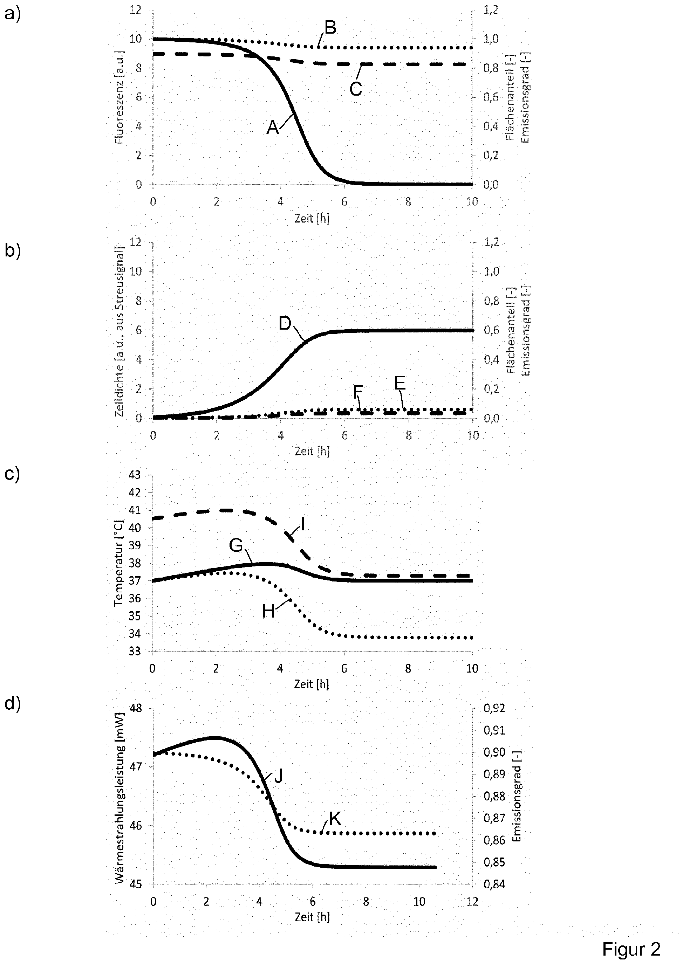

Anhand der Figur 2 werden schematisch am Beispiel eines biologischen Prozesses die Vorteile des erfindungsgemäßen Verfahrens veranschaulicht. Der biologische Prozess läuft im Reaktor 1 ab. Der Reaktor 1 wird anhand der Temperierungsvorrichtung 8 hier beispielhaft auf eine Starttemperatur von 37°C temperiert. Der Reaktor 1 ist mit einem Kulturmedium gefüllt, umfassend eine anfängliche Zellzahl als erste Komponente. Das Medium enthält ein Substrat, welches den Emissionsgrad des Mediums im Vergleich zum reinen Wasser um ca. 2% erhöht und welches fluoresziert. Dies stellt eine zweite Komponente dar. Bei dem Substrat kann es sich beispielsweise um Hefeextrakt oder Sojaextrakt handeln. Im Laufe des Prozesses wachsen die Zellen, wodurch die Zelldichte steigt und gleichzeitig das oben genannte Substrat verbraucht wird; die Mengenanteile der beiden Komponenten ändern sich folglich. Dies beeinflusst den makroskopischen Emissionsgrad C des Reaktorinhalts 2, wie in Figur 2a dargestellt ist. Während jede Zelle für sich betrachtet einen konstanten Emissionsgrad zeigt, steigt jedoch im Laufe des Prozesses die Streuintensität der Zellen D, somit auch deren Anteil E an der vor dem ersten Sensor 3 gelegenen Querschnittsfläche. Diese Änderung führt zu einer Änderung des Mischungsverhältnisses der Komponenten des Reaktorinhalts 2 und damit auch zu einer Änderung des mit dem Flächenanteil gewichtet mikroskopischen Emissionsgrades F, wie in Figur 2b dargestellt. Zur ursächlichen Beschreibung dieser Emissionsgradänderung wird als Parameter 10 (aus Figur 1) die Rückstreuintensität des Reaktorinhalts 2 beispielsweise bei 520nm bestimmt. Aus dieser Rückstreuintensität wird die Zelldichte berechnet und aus ihr die Änderung des mit dem Flächenanteil E gewichteten Emissionsgrads F der Zellen ermittelt.

Im Gegensatz dazu sinkt durch Verbrauch des Substrates auch der mikroskopische Emissionsgrad des Mediums C (siehe Figur 2a). Zur ursächlichen Beschreibung dieser Änderung des Emissiongrades C wird als Parameter 10 die Fluoreszenz A des Mediums bestimmt. Aus dieser Fluoreszenz A wird die Konzentration des Substrates errechnet, welches den Emissionsgrad beeinflusst. Gleichermaßen ändert sich auch der Emissionsgrad B des Substrates. Die Kenntnis über die Konzentration des Substrates erlaubt daraufhin nun die Bestimmung des Emissionsgrades C des Mediums in Abhängigkeit der Substratkonzentration.

Da Zellen und Medium gemeinsam 100% der Fläche vor dem Sensor ausmachen, ergibt sich der gesamte makroskopische Emissionsgrad K (Figur 2d) im einfachsten Fall aus der gewichteten Summe der einzelnen, oben beschriebenen mikroskopischen Emissionsgrade C (Figur 2a) und F (Figur 2b).

Die wachsenden Zellen produzieren im Beispielprozess mehr Wärme, als über den Reaktor 1 abgeführt werden kann, so dass die Temperatur G (Figur 2c) im Reaktor 1 und Reaktorinhalt 2 zunächst um ca. 1°C ansteigt und mit dem Ausklingen der Wachstumsphase wieder auf den Startwert von 37°C abfällt.

Die vom ersten Sensor 3 erfasste Wärmestrahlungsleistung J (Figur 2d) erlaubt grundsätzlich eine Berechnung der Temperatur des Reaktorinhalts 2. Dies wird im Beispielprozess jedoch durch den sich ändernden Gesamtemissionsgrad K erschwert. Verfahren nach dem Stand der Technik liefern daher keine zuverlässigen Ergebnisse. So sind in Figur 2c beispielhaft Temperaturverläufe H, I für den Reaktorinhalt dargestellt, bei deren Berechnung jeweils unterschiedliche, über die Prozessdauer konstante Emissionsgrade zugrunde gelegt sind (H: Emissionsgrad = 0,86; J: Emissionsgrad = 0,90). Es ist ersichtlich, dass die Güte des Wertes des Emissionsgrads einen erheblichen Einfluss auf die Genauigkeit der Bestimmung der Temperatur G hat.

Die Verwendung des Startemissionsgrades von 0,9 (Kurve H) unterschätzt die tatsächliche Temperatur, während die Verwendung des finalen Emissionsgrades von 0,86 (Kurve I) die tatsächliche Temperatur überschätzt.

Das beanspruchte Verfahren hingegen bestimmt mittels geeigneter mathematischer Verfahren die Temperatur zuverlässig (Kurve G in Figur 2c) aus der über den ersten Sensor 3 erfassten Wärmestrahlungsleistung J in Kombination mit durch zwei verschiedene Sensoren 4 bestimmten zusätzlichen Parametern 10. Im vorliegenden Beispiel sind die zusätzlichen Parameter die Streuintensität der Zellen D (Figur 2b) und die Fluoreszenz des Mediums A (Figur 2a), welche jeweils mit dem Emissionsgrad der jeweiligen Komponente des Reaktorinhalts 2 korrelieren.

## Bezugszeichenliste

1    Reaktor
2    Reaktorinhalt
3    erster Sensor zur Erfassung von Wärmestrahlung 9a und/oder 9b
4    zweiter Sensor
5    Drucksensor
6    Volumenstromsensor
7    Ventil
8    Vorrichtung zur Temperierung von Reaktor 1 und Reaktorinhalt 2
9    Wärmestrahlung
10   zweiter Parameter
11   Datenleitung

12   Rechner
A    Fluoreszenz Medium
B    Flächenanteil Medium
C    Emissionsgrad Medium
D    Zelldichte, abgebildet z.B. durchgemessene Streuintensität der Zellen
E    Flächenanteil der Zellen
F    Emissionsgrad der Zellen
G    ermittelte Prozesstemperatur
H    berechnete Prozesstemperatur bei Annahme eines Emissionsgrads von 0,9
I    berechnete Prozesstemperatur bei Annahme eines Emissionsgrads von 0,86
J    gemessene Wärmestrahlung
K    Emissionsgrad gesamt

## Patentansprüche

1. Verfahren zum Überwachen einer Prozesstemperatur (G) eines biochemischen oder biologischen Prozesses, welcher innerhalb eines Reaktors (1) abläuft,

wobei der Prozess zumindest eine erste Komponente mit einem ersten Emissionsgrad (C, $\varepsilon$1) und eine zweite Komponente mit einem zweiten Emissionsgrad (F, $\varepsilon$2) umfasst,

wobei der erste Emissionsgrad (B; $\varepsilon$1) und der zweite Emissionsgrad (F; $\varepsilon$2) unterschiedlich sind,

das Anteilsverhältnis der beiden Komponenten sich während des Prozesses verändert,

umfassend eine erste Messung einer vom Prozess ausgehenden Wärmestrahlung (J, 9a, 9b), wobei die Messung bezüglich des Prozesses nicht invasiv, nämlich anhand eines außerhalb des Reaktors (1) angeordneten Temperatursensors (3) erfolgt,

**dadurch gekennzeichnet,**

**dass** anhand zumindest einer zweiten nicht invasiven Messung, nämlich anhand eines außerhalb des Reaktors (1) angeordneten Sensors (4), zumindest ein zweiter Prozessparameter (A, 10) ermittelt wird, der mit einem Gesamtemissionsgrad (K) des Prozesses korreliert,

**dass** die erste Messung und die zweite Messung mehrfach während des Prozesses durchgeführt werden,

**dass** auf Basis des zumindest einen zweiten Prozessparameters (10) ein Anteilsverhältnis der ersten und zweiten Komponenten zueinander ermittelt wird,

**dass** auf Basis der gemessenen Wärmestrahlung (J, 9a, 9b) und auf Basis des Anteilsverhältnisses unter Berücksichtigung der jeweiligen Emissionsgrade (C, $\varepsilon$1; F, $\varepsilon$1) der Komponenten die Prozesstemperatur (G) ermittelt wird.

2. Verfahren nach dem vorherigen Anspruch,

**dadurch gekennzeichnet,**
**dass** auf Basis des Anteilsverhältnisses und unter Berücksichtigung der jeweiligen Emissionsgraden (C, $\varepsilon 1$; F, $\varepsilon 1$) der Komponenten ein Gesamtemissionsgrad (K) ermittelbar ist.

3. Verfahren nach einem der vorherigen Ansprüche, **dadurch gekennzeichnet,** **dass** der zweite Prozessparameter (A, 10) mithilfe eines photometrischen Messverfahrens ermittelt wird.

4. Verfahren nach einem der vorherigen Ansprüche, **dadurch gekennzeichnet,** **dass** während des Prozesses zumindest eine der zumindest zwei Komponenten in zumindest eine dritte Komponente umgewandelt wird und **dass** die Anteilsabnahme der umzuwandelnden Komponente und/oder die Anteilszunahme der dritten Komponente über die zweite Messung ermittelt wird.

5. Reaktoranordnung, eingerichtet zur Durchführung des Verfahrens nach einem der vorherigen Ansprüche, umfassend
einen Reaktor (1), in welchem ein biochemischer oder biologischer Prozesses ablaufen kann,
eine erste nicht invasive, nämlich außerhalb des Reaktors angeordnete, Messvorrichtung (3) zur Erfassung einer vom Prozess
ausgehenden Wärmestrahlung (J, 9a, 9b),
eine zweite nicht invasive, nämlich außerhalb des Reaktors abgeordnete, Messvorrichtung (4) zum Ermitteln zumindest eines zweiten Prozessparameters (A, 10), auf dessen Basis ein Anteilsverhältnis der ersten und zweiten Komponenten zueinander ermittelbar ist,
einen Rechner (12), welcher eingerichtet ist, auf Basis der gemessenen Wärmestrahlung (J, 9a, 9b) und auf Basis des Anteilsverhältnisse der Komponenten und unter Berücksichtigung der jeweiligen Emissionsgrade (C, $\varepsilon 1$; F, $\varepsilon 1$) der Komponenten die Prozesstemperatur (G) zu ermitteln.

**Claims**

1. Method for monitoring a process temperature (G) of a biochemical or biological process which takes place within a reactor (1), the process comprising at least a first component having a first emissivity (C, $\varepsilon 1$) and a second component having a second emissivity (F, $\varepsilon 2$), the first emissivity (B; $\varepsilon 1$) and the second emissivity (F; $\varepsilon 2$) being different, the proportion ratio of the two components changing during the process, the method comprising a first measurement of thermal radiation (J, 9a, 9b) emitted from the process, the measurement being non-invasive with respect to the process, specifically by means of a temperature sensor (3) arranged outside the reactor (1), **characterized in that**, by means of at least one second non-invasive measurement, specifically by means of a sensor (4) arranged outside the reactor (1), at least one second process parameter (A, 10) is determined which correlates with a total emissivity (K) of the process, **in that** the first measurement and the second measurement are carried out multiple times during the process, **in that** a proportion ratio of the first and the second component with respect to one another is determined on the basis of the at least one second process parameter (10), and **in that** the process temperature (G) is determined on the basis of the measured thermal radiation (J, 9a, 9b) and on the basis of the proportion ratio taking into account the respective emissivities (C, $\varepsilon 1$; F, $\varepsilon 1$) of the components.

2. Method according to the preceding claim, **characterized in that** a total emissivity (K) can be determined on the basis of the proportion ratio and taking into account the respective emissivities (C, $\varepsilon 1$; F, $\varepsilon 1$) of the components.

3. Method according to either of the preceding claims, **characterized in that** the second process parameter (A, 10) is determined using a photometric measurement method.

4. Method according to any of the preceding claims, **characterized in that** at least one of the at least two components is converted into at least one third component during the process, and **in that** the decrease in the proportion of the component to be converted and/or the increase in the proportion of the third component is determined by the second measurement.

5. Reactor arrangement, configured to carry out the method according to any of the preceding claims, comprising a reactor (1) in which a biochemical or biological process can take place, a first non-invasive measuring device (3), which is arranged specifically outside the reactor, for detecting thermal radiation (J, 9a, 9b) emitted from the process, a second non-invasive measuring device (4), which is arranged specifically outside the reactor, for determining at least one second process parameter (A, 10), on the basis of which a proportion ratio of the first and the second component with respect to one another can be determined, and a computer (12) which is configured to determine the process temperature (G) on the basis of the measured thermal radiation (J, 9a, 9b) and on the basis of the proportion ratios of the components and taking into account the respective emissivities (C, $\varepsilon 1$; F, $\varepsilon 1$) of the components.

**Revendications**

1. Procédé de surveillance d'une température de processus (G) d'un processus biochimique ou biologique se déroulant à l'intérieur d'un réacteur (1), dans lequel le processus comprend au moins un premier composant présentant une première émissivité (C, ε1) et un deuxième composant présentant une seconde émissivité (F, ε2), dans lequel la première émissivité (B ; ε1) et la seconde émissivité (F ; ε2) sont différentes, dans lequel le rapport entre les deux composants change pendant le processus, comprenant une première mesure d'un rayonnement thermique (J, 9a, 9b) émanant du processus, dans lequel la mesure est non invasive par rapport au processus, à savoir est effectuée au moyen d'un capteur de température (3) disposé à l'extérieur du réacteur (1), **caractérisé en ce que**, au moyen d'au moins une seconde mesure non invasive, à savoir au moyen d'un capteur (4) disposé à l'extérieur du réacteur (1), au moins un second paramètre de processus (A, 10) est déterminé, lequel second paramètre de processus est en corrélation avec une émissivité totale (K) du processus, **en ce que** la première mesure et la seconde mesure sont effectuées à plusieurs reprises pendant le processus, **en ce qu'**un rapport entre les premier et deuxième composants est déterminé sur la base de l'au moins un second paramètre de processus (10), **en ce que** la température de processus (G) est déterminée sur la base du rayonnement thermique (J, 9a, 9b) mesuré et sur la base du rapport en tenant compte des émissivités respectives (C, ε1 ; F, ε1) des composants.

2. Procédé selon la revendication précédente, **caractérisé en ce qu'**une émissivité totale (K) peut être déterminée sur la base du rapport entre les composants et en tenant compte des émissivités respectives (C, ε1 ; F, ε1) des composants.

3. Procédé selon l'une des revendications précédentes, **caractérisé en ce que** le second paramètre du processus (A, 10) est déterminé au moyen d'un procédé de mesure photométrique.

4. Procédé selon l'une des revendications précédentes, **caractérisé en ce que**, pendant le processus, au moins l'un des au moins deux composants est converti en au moins un troisième composant et **en ce que** la diminution de proportion du composant à convertir et/ou l'augmentation de proportion du troisième composant est déterminée au moyen de la seconde mesure.

5. Agencement de réacteur configuré pour exécuter le procédé selon l'une des revendications précédentes, comprenant un réacteur (1) dans lequel un processus biochimique ou biologique peut se dérouler, un premier dispositif de mesure non invasif (3), à savoir disposé à l'extérieur du réacteur, pour détecter un rayonnement thermique (J, 9a, 9b) émanant du processus, un second dispositif de mesure non invasive (4), à savoir disposé à l'extérieur du réacteur, pour déterminer au moins un second paramètre de processus (A, 10), sur la base duquel un rapport entre les premier et deuxième composants peut être déterminé, un ordinateur (12) configuré pour déterminer la température de processus (G) sur la base du rayonnement thermique (J, 9a, 9b) mesuré et sur la base du rapport entre les composants, et en tenant compte des émissivités respectives (C, ε1 ; F, ε1) des composants.

Figur 1

Figur 2

**IN DER BESCHREIBUNG AUFGEFÜHRTE DOKUMENTE**

**In der Beschreibung aufgeführte Patentdokumente**

- WO 2013192510 A